# DEMANDE DE BREVET EUROPEEN

(11) **EP 2 058 539 A2**
(43) Date de publication de la demande: **13.05.2009**
(21) Numéro de dépôt: 08291035.7
(22) Date de dépôt: 05.11.2008
(51) Int. Cl.: F16C 19/52, F16C 33/78, F16J 15/32, G01P 3/44

(54) **Dispositif d'étanchéité, notamment à codeur magnétique intégré, comprenant une lèvre d'étanchéité magnétique**

(30) Priorité: 09.11.2007 FR 0707890
(71) Demandeur: SNR Roulements, 74000 Annecy (FR)
(72) Inventeur: Nantua, René, 466, route de Clermont (FR)
(74) Mandataire: Sayettat, Julien Christian

(57) **Abrégé**

L'invention concerne un dispositif d'étanchéité pour un palier à roulement, ledit dispositif comprenant au moins une armature (5) destinée à être associée à un organe (2) dudit palier, ledit dispositif comprenant en outre un élément d'étanchéité (7) qui est porté par ladite armature, ledit élément d'étanchéité comportant au moins une lèvre d'étanchéité (8), dans lequel au moins la lèvre d'étanchéité (8) est réalisée avec un matériau magnétisé de sorte à pouvoir étanchéifier ledit palier en disposant ladite lèvre en contact frottant sur une portée (9) réalisée en matériau ferromagnétique.

## Description

L'invention concerne un dispositif d'étanchéité, notamment à codeur magnétique intégré, pour un palier notamment à roulement, un palier à roulement équipé d'un tel dispositif ainsi qu'un montage comprenant un tel palier et un système capteur d'informations.

En particulier, l'invention s'applique pour étanchéifier au moins un côté de l'espace de roulement de paliers à roulement de véhicule automobile.

Pour ce faire, on connaît l'utilisation de dispositifs d'étanchéité comprenant au moins une armature portant un élément d'étanchéité pourvue d'au moins une lèvre d'étanchéité. Ainsi, en associant l'armature à un organe du palier et en mettant en contact frottant la lèvre d'étanchéité sur une portée, il est possible de limiter les échanges entre l'extérieur et l'intérieur de l'espace de roulement, notamment relativement à l'introduction de polluants ou aux fuites du lubrifiant disposé dans ledit espace de roulement.

Toutefois, cette étanchéité est basée uniquement sur une interférence géométrique entre la lèvre et la portée, ce qui n'est pas toujours suffisant pour assurer une bonne fiabilité, alors que les exigences en la matière augmentent. En particulier, les contraintes de positionnement relatif sont alors importantes pour obtenir une bonne étanchéité, notamment relativement à l'écrasement de la lèvre sur la portée. En outre, il peut se produire un désalignement sous effort de virage qui provoque une réduction de l'interférence géométrique voire une perte du contact étanche dans le temps, qui peut se produire également du fait de l'usure de la lèvre.

En outre, il peut être nécessaire de bénéficier d'un codage de la position angulaire de l'organe tournant du palier, notamment pour connaître la vitesse de roue d'un véhicule dans le cas d'un palier à roulement de roue.

De tels paliers, lorsqu'ils sont équipés d'un système capteur de vitesse de rotation, de position angulaire et/ou de sens de rotation, peuvent notamment être employés pour le montage d'une roue de véhicule automobile qui est pourvu d'un système embarqué de contrôle global du châssis. En effet, les informations peuvent alors être utilisées par un calculateur d'un tel système ainsi que par tous systèmes embarqués utilisant la mesure de vitesse de roue comme donnée d'entrée.

Un des problèmes qui se pose avec de tels montages est celui de la protection du codeur vis-à-vis des polluants, en combinaison avec la protection de l'espace de roulement.

Pour résoudre ce problème, on a proposé un dispositif d'étanchéité à codeur magnétique intégré présentant un espace annulaire formé entre deux armatures rigides qui sont associées respectivement à l'organe fixe et à l'organe tournant du palier. L'étanchéité de l'espace annulaire est alors réalisée au moyen d'un élément souple comportant au moins une lèvre assurant un contact frottant d'étanchéité lors de la rotation du palier. Ainsi, en disposant le codeur dans l'espace annulaire, on réalise la protection du codeur et de l'espace de roulement vis-à-vis des polluants.

Toutefois, le codeur étant disposé dans l'espace annulaire, la lecture des signaux qu'il délivre doit être réalisée au travers d'une armature. Cette réalisation peut alors conduire à une augmentation de la taille du codeur afin d'ajuster l'amplitude des signaux délivrés à une valeur suffisante pour leur détection.

En outre, l'amplitude des signaux doit être d'autant plus importante dans le cas où le capteur est dissocié mécaniquement du palier, puisqu'il est alors disposé à une distance plus importante du codeur.

Toutefois, la solution proposée par l'art antérieur pour assurer l'étanchéité nécessite un encombrement qui, dans le cas d'une lecture des signaux au travers de l'armature, n'est pas toujours disponible dans le montage à réaliser. Il en résulte que la satisfaction de la contrainte sur l'amplitude des signaux ne peut être réalisée qu'au détriment de la fonction de protection, notamment du codeur.

Or, dans les applications envisagées, les contraintes d'étanchéité sont sévères, notamment relativement à la durée de vie souhaitée dans les conditions d'environnements auxquels les dispositifs d'étanchéité sont soumis.

L'invention vise à résoudre les problèmes de l'art antérieur en proposant notamment un dispositif d'étanchéité à fiabilité améliorée.

A cet effet, et selon un premier aspect, l'invention propose un dispositif d'étanchéité pour un palier à roulement, ledit dispositif comprenant au moins une armature destinée à être associée à un organe dudit palier, ledit dispositif comprenant en outre un élément d'étanchéité qui est porté par ladite armature, ledit élément d'étanchéité comportant au moins une lèvre d'étanchéité, dans lequel au moins la lèvre d'étanchéité est réalisée avec un matériau magnétisé de sorte à pouvoir étanchéifier ledit palier en disposant ladite lèvre en contact frottant sur une portée réalisée en matériau ferromagnétique.

En outre, l'invention propose un dispositif d'étanchéité à codeur magnétique intégré dans lequel les contraintes de protection du codeur et d'amplitude des signaux qu'il délivre peuvent être satisfaites conjointement, et ce même en cas d'espace disponible de taille réduite dans le montage.

A cet effet, l'invention propose un dispositif d'étanchéité tel que présenté ci-dessus, ledit dispositif comprenant une armature interne destinée à être associée à un organe tournant du palier et une armature externe destinée à être associée à un organe fixe dudit palier, lesdites armatures formant entre elles un espace annulaire dans lequel un codeur magnétique est associé à l'armature interne, l'armature externe étant réalisée en matériau amagnétique de sorte à permettre la lecture à travers elle des signaux magnétiques délivrés par le codeur, ledit élément permettant d'étanchéifier un côté de l'espace annulaire.

Selon un deuxième aspect, l'invention propose un palier à roulement comprenant un organe fixe, un organe tournant et des corps roulants disposés dans un espace de roulement formé entre lesdits organes pour permettre leur rotation relative, ledit palier étant équipé d'au moins un tel dispositif d'étanchéité, dans lequel au moins une lèvre d'étanchéité réalisée avec un matériau magnétisé est en contact frottant sur une portée réalisée en matériau ferromagnétique de sorte à étanchéifier un côté dudit palier.

Selon un troisième aspect, l'invention propose un montage comprenant un tel palier à roulement, ledit montage comprenant en outre un système capteur d'informations comprenant le codeur qui délivre des impulsions magnétiques et un capteur muni d'au moins deux éléments sensibles aptes à détecter ces impulsions, ledit capteur étant disposé, en regard du codeur, devant l'armature externe de sorte que lesdites impulsions soient détectées au travers de ladite armature.

D'autres objets et avantages de l'invention apparaîtront dans la description qui suit, faite en référence aux figures annexées, dans lesquelles :
- la figure 1 est une vue partielle en coupe longitudinale d'un dispositif d'étanchéité à codeur magnétique intégré selon un mode de réalisation de l'invention ;
- la figure 2 est une vue partielle en coupe longitudinale d'un dispositif selon une variante du mode de réalisation de la figure 1 ;
- la figure 3 est une vue partielle en coupe longitudinale d'un palier à roulement selon un mode de réalisation de l'invention ;
- les figures 4 à 6 sont des vues partielles en coupe longitudinale d'un palier à roulement selon respectivement une variante du mode de réalisation de la figure 3.

En relation avec les figures, on décrit un dispositif d'étanchéité à codeur magnétique 1 intégré pour un palier, notamment pour un palier à roulement ou un roulement de roue de véhicule automobile.

Bien que la description soit faite en relation avec un tel dispositif d'étanchéité, les caractéristiques décrites pour ledit dispositif peuvent être réalisées en relation avec un dispositif d'étanchéité dépourvu de codeur magnétique, notamment relativement à la présence d'une armature portant un élément d'étanchéité magnétique selon l'une des réalisations décrites.

Le palier comprend un organe fixe 2, un organe tournant 3 et des corps roulants disposés dans un espace de roulement formé entre lesdits organes pour permettre leur rotation relative. Dans les modes de réalisation décrits, l'organe tournant 3 est intérieur par rapport à l'organe fixe 2, sans que cela ne limite l'invention à cette réalisation particulière.

Pour étanchéifier un côté de l'espace de roulement, le palier est équipé d'un dispositif d'étanchéité qui comprend une armature interne annulaire 4 destinée à être associée à l'organe tournant 3 et une armature externe annulaire 5 destinée à être associée à l'organe fixe 2. En particulier, les armatures 4, 5 peuvent être rigides en étant réalisées en matériau métallique, notamment en tôle emboutie. Selon une réalisation, chaque côté de l'espace de roulement peut être étanchéifié par respectivement un dispositif d'étanchéité.

Selon les modes de réalisation représentés, le dispositif d'étanchéité intègre également un codeur magnétique 1. Pour ce faire, les armatures 4, 5 sont agencées pour former entre elles un espace annulaire 6 dans lequel le codeur magnétique 1 est associé à l'armature interne 4. Plus précisément, l'armature interne 4 représentée comprend une portée radiale 4a sur la face externe de laquelle le codeur 1 est associé. En outre, l'armature interne 4 présente une portée axiale 4b d'emmanchement sur l'organe tournant 3. Toutefois, tout autre mode de liaison de l'armature 4 à l'organe tournant 3 est également envisageable.

Par ailleurs, le codeur 1 étant disposé à l'intérieur de l'espace annulaire 6, la lecture des signaux magnétiques délivrés par ledit codeur doit être réalisée au travers de l'armature externe 5. Pour ce faire, il est prévu que l'armature externe 5 soit réalisée en matériau amagnétique.

Selon une réalisation, le codeur 1 forme un aimant multipolaire comportant 2N paires de pôles, ledit aimant étant réalisé en matériau élastomérique chargé en particules magnétiques. Le taux de charge en particules magnétiques du codeur 1 peut être classiquement de l'ordre de 80% en poids.

A titre d'exemple, le codeur 1 peut être réalisé en un copolymère butadiène nitrile-acrylique (NBR), éventuellement renforcé mécaniquement par des charges telles que du noir de carbone, les particules magnétiques pouvant être à base de ferrite. Ainsi, par magnétisation du codeur 1, on peut obtenir une pluralité de domaines contigus qui présente une alternance régulière de pôles Nord et Sud formant une paire de pôles.

Comme représenté sur les figures, l'association du codeur 1 sur l'armature interne 4 peut être réalisée par surmoulage, ledit codeur comprenant en outre une partie extérieure 1 a enrobant la partie extrême libre 4c de l'armature interne 4 de sorte à améliorer la fiabilité de l'association.

Pour protéger le codeur 1 vis-à-vis des polluants, le dispositif comprend également un élément d'étanchéité 7 qui comporte au moins une lèvre d'étanchéité 8, ladite lèvre étant disposée sur une portée 9 de sorte à assurer un contact frottant d'étanchéité lors de la rotation du palier.

Dans les modes de réalisation représentés, l'élément d'étanchéité 7 est porté par l'armature externe 5, notamment en étant surmoulé sur elle. Toutefois, on peut prévoir que l'élément d'étanchéité soit porté par l'armature interne.

Comme représenté sur les figures, le codeur 1 présente notamment une épaisseur importante afin d'augmenter l'amplitude des signaux devant être détectés au travers de l'armature externe 5. Ainsi, le codeur 1 remplit sensiblement la totalité de l'espace 6 disponible entre les armatures 4, 5, ce qui laisse un espace limité pour l'intégration de l'élément d'étanchéité 7.

En particulier, dans le mode de réalisation décrit, l'élément d'étanchéité 7 est formé d'une base 10 sur lequel s'étend au moins une lèvre 8, ladite base étant associée uniquement sur la partie extrême libre 5a de l'armature externe 5. Ainsi, l'élément d'étanchéité 7 n'est pas disposé axialement en regard du codeur 1, ce qui limite l'encombrement axial du dispositif. Toutefois, la dimension de la zone d'association avec l'armature externe 5 étant limitée, l'effort exercé par le contact frottant n'est pas toujours suffisant pour fiabiliser l'étanchéité.

L'invention prévoit qu'au moins la lèvre d'étanchéité 8 soit réalisée en matériau magnétisé de sorte à pouvoir étanchéifier le palier, et notamment un côté de l'espace annulaire 6 dans les modes de réalisation représentés, en disposant ladite lèvre en contact frottant sur une portée 9 réalisée en matériau ferromagnétique, la pression de ladite lèvre étant due totalement ou partiellement au champ magnétique qu'elle délivre. Ainsi, en combinaison avec l'interférence géométrique entre la lèvre 8 et la portée 9, l'attraction magnétique augmente l'effort exercé par le contact frottant, de sorte à fiabiliser l'étanchéité conférée.

Selon une réalisation, l'élément d'étanchéité 7 est réalisé en matériau élastomérique, par exemple du même type que celui formant le codeur 1, chargé en particules magnétiques, par exemple les mêmes que celles chargeant le codeur 1. En variante, seule la lèvre 8 peut être chargée en particules magnétiques, la base 10 étant formée en élastomère non chargé.

Pour ajuster l'effort du contact frottant, il est possible de jouer sur le taux de charge en particules magnétiques du matériau formant la lèvre 8, de sorte à faire varier sa souplesse. A titre d'exemple, ce taux de charge peut être inférieur à 80% en poids, et notamment inférieur au taux de charge du matériau formant le codeur 1.

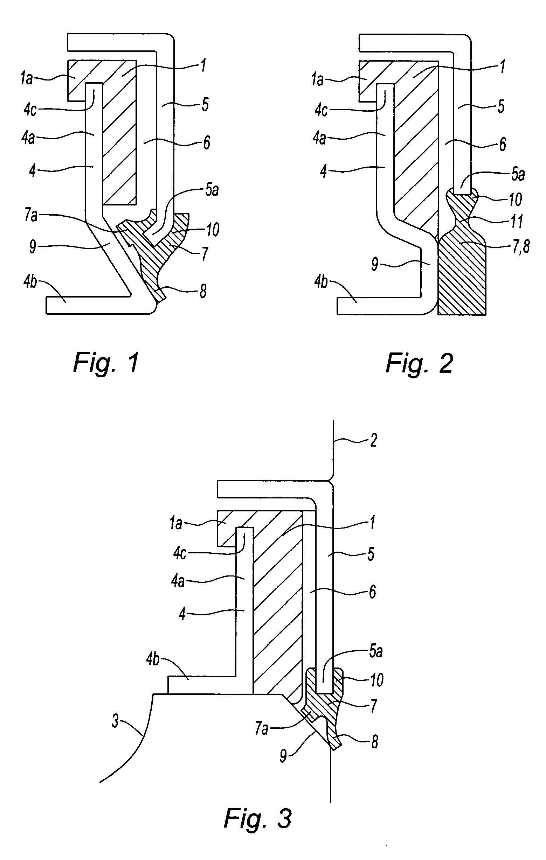

La figure 1 représente un dispositif d'étanchéité dans lequel la portée de frottement 9 de la lèvre d'étanchéité 8 est réalisée sur l'armature interne 4 qui est réalisée en matériau ferromagnétique. Plus précisément, la portée de frottement 9 est formée sur le congé de raccordement entre la portée axiale 4b et la portée radiale 4a, ladite portée de frottement étant inclinée vers l'espace de roulement. En outre, la partie extrême libre 5a de l'armature externe 5 présente une inclinaison de sorte à être sensiblement perpendiculaire à la portée de frottement 9.

Par ailleurs, l'élément d'étanchéité 7 comprend, disposée de part et d'autre de l'armature externe 5, un talon extérieur 7a dont la face active est sensiblement parallèlement en regard de la portée de frottement 9, et une lèvre intérieure 8 dont la face d'appui est agencée pour induire un fléchissement de ladite lèvre vers l'extérieur de l'espace annulaire 6.

La figure 2 présente une variante de la figure 1 dans laquelle la portée de frottement 9 est sensiblement radiale, ladite portée étant formée sur le congé de raccordement qui présente une forme en L renversé.

Par ailleurs, la lèvre frottante 8 est formée sur la face radiale interne de l'élément d'étanchéité 7 qui présente une forme sensiblement parallélépipédique. En outre, l'élément d'étanchéité 7 comprend une zone charnière 11, sous la forme d'une jonction de section amoindrie, par l'intermédiaire de laquelle la lèvre d'étanchéité 8 est associée à l'armature externe 5. Ainsi, la lèvre 8 est associée à l'armature 5 avec une possibilité de rotation et de translation de sorte à améliorer la mise en contact de ladite lèvre sur la portée de frottement 9.

En outre, notamment dans cette réalisation avec zone charnière 11, il est possible d'intégrer dans l'élément d'étanchéité 7 une culasse de fermeture du champ magnétique, par exemple sous la forme d'une plaque en matériau ferromagnétique, de sorte à améliorer l'attraction magnétique et donc l'étanchéité entre ledit élément d'étanchéité et la portée 9.

La figure 3 représente un palier à roulement équipé d'un dispositif d'étanchéité à codeur magnétique 1 intégré selon l'invention, l'armature interne 4 étant associée à l'organe tournant 3 et l'armature externe 5 étant associée à l'armature fixe 2. L'élément d'étanchéité 7 présent une géométrie analogue à celle selon la figure 1, la portée de frottement 9 étant réalisée sur l'organe tournant 3 qui est constitué en acier ferromagnétique, en particulier sous la forme d'une chicane conique. Cette réalisation permet d'augmenter la hauteur et l'épaisseur du codeur 1, et donc l'amplitude des signaux délivrés.

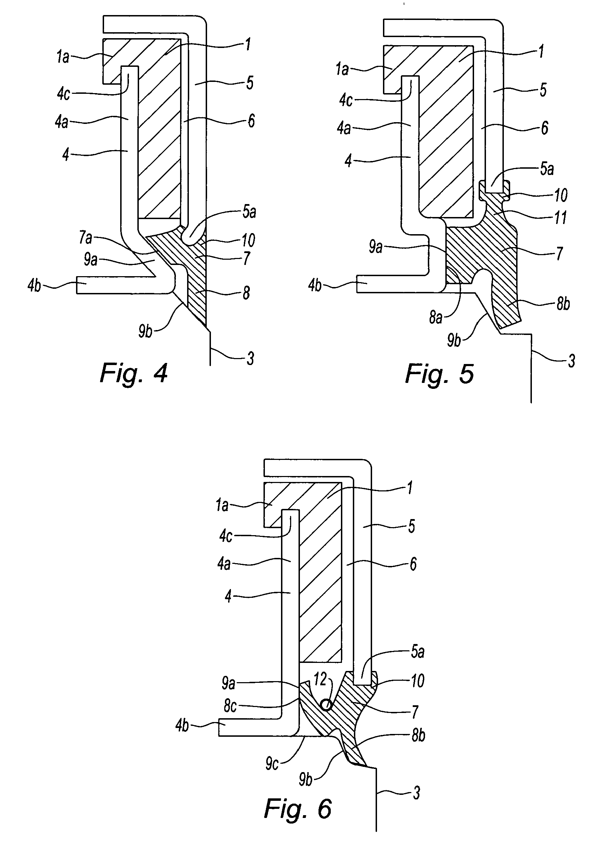

Sur la figure 4, l'élément d'étanchéité 7 comprend un talon extérieur 7a en regard d'une portée 9a d'une armature interne qui est analogue à celle selon la figure 1, et une lèvre intérieure 8 en contact sur une portée de frottement 9b de l'organe tournant 3 qui est analogue à celle selon la figure 3.

Sur la figure 5, l'élément d'étanchéité 7 de la figure 2 a été modifié pour présenter une lèvre extérieure 8a en contact sur une portée 9a formée sur l'armature 4, et une lèvre intérieure 8b qui est en contact sur une portée de frottement 9b formée sur l'organe tournant 3.

Sur la figure 6, l'élément d'étanchéité 7 comprend en outre un ressort annulaire 12 exerçant un effort de plaquage d'une lèvre d'étanchéité extérieure 8c en contact frottant sur une portée radiale 9a de l'armature interne 4. Plus précisément, la base de la lèvre 8c sur laquelle est disposé le ressort 12 est en appui sur une portée axiale 9c de l'organe tournant 3, l'extrémité de ladite lèvre étant en appui sur la portée 9a. En outre, une lèvre intérieure 8b magnétique est en appui sur une portée de frottement 9b formée sur l'organe tournant 3.

Dans cette réalisation, la lèvre extérieure 8c peut être dépourvue de particules magnétiques. De façon générale, lorsqu'au moins deux lèvres 8 sont prévues sur l'élément d'étanchéité 7, l'une d'entre elles peut être dépourvue de particules magnétiques.

On décrit ci-dessous, un montage comprenant un palier à roulement selon l'invention et un système capteur d'informations comprenant le codeur 1 formant un aimant à 2N paires de pôles de sorte à délivrer des impulsions magnétiques. En outre, le système comprend un capteur muni d'au moins deux éléments sensibles aptes à détecter ces impulsions, ledit capteur étant disposé, en regard du codeur 1, devant l'armature externe 5 de sorte que lesdites impulsions soient détectées au travers de ladite armature. En particulier, le capteur peut être dissocié mécaniquement de l'organe fixe 2 et de l'armature externe 5.

En combinaison avec la taille du codeur 1, l'augmentation de l'amplitude des signaux délivrés peut être obtenue avec un aimant multipolaire comprenant un nombre réduit de paires de pôles, par exemple 2N paires de pôles avec N strictement inférieur à 24. En particulier, N peut être égal à 12 ou à 6 de sorte à disposer d'un aimant multipolaire à 24 ou 12 paires de pôles. Ainsi, le nombre de paires de pôles étant réduit, leur dimension est plus importante de sorte que chaque pôle délivre un signal de plus grande amplitude. Il en résulte donc que la distance d'entrefer, c'est-à-dire la distance à laquelle les éléments sensibles peuvent détecter le signal délivré, est plus importante qu'avec un aimant conventionnel à 48 paires de pôles par exemple.

Toutefois, la résolution du signal délivré par un tel aimant est moins importante, puisque le nombre d'impulsions délivrés par le capteur par tour de codeur 1 dépend directement du nombre de paires de pôles.

Pour s'affranchir de cette baisse de résolution, le capteur comprend un dispositif de traitement des signaux détectés par les éléments sensibles qui est agencé pour augmenter la résolution du signal de sortie par rapport à celle des signaux détectés. Pour ce faire, le dispositif de traitement comprend des moyens déclencheurs et des moyens d'application de la fonction XOR (OU exclusif) sur les signaux déclenchés.

On décrit le traitement de deux signaux analogiques sinusoïdaux S1, S2 qui sont délivrés par les éléments sensibles. Dans cette réalisation, les éléments sensibles peuvent comprendre des sondes à effet Hall ou des magnétorésistances. En particulier, deux éléments sensibles peuvent être utilisés pour délivrer chacun un signal sinusoïdal S1, S2, ou deux groupes d'éléments sensibles peuvent être utilisés pour, par sommation de chacun des signaux d'un groupe, délivrer les deux signaux sinusoïdaux S1, S2 issus de respectivement un groupe. Dans la description, on utilise le terme « élément sensible » pour désigner indifféremment un élément sensible ou un groupe d'éléments sensibles.

Les deux signaux sinusoïdaux S1, S2 sont en quadrature et présentent une résolution égale à celle du signal délivré par l'aimant. Selon une réalisation, cette quadrature peut être obtenue en disposant les deux éléments sensibles à une distance égale à une demi-longueur polaire de l'aimant.

Selon une autre réalisation, lorsque la distance inter-éléments sensibles n'est pas parfaitement adaptée à la longueur polaire de l'aimant, le dispositif de traitement comprend en outre des moyens de combinaison des deux signaux sinusoïdaux issus de respectivement un élément sensible, de sorte à délivrer deux signaux S1, S2 en quadrature. En particulier, les moyens de combinaison peuvent former la somme et la différence des signaux de sorte à délivrer respectivement les signaux S1, S2 en quadrature.

Ensuite, les signaux S1, S2 en quadrature sont traités par les moyens déclencheurs pour former les signaux digitaux S'1 et S'2. Pour ce faire, les signaux S1, S2 peuvent être déclenchés autour de zéro dans un circuit de déclenchement dans lequel l'amplitude du signal de sortie présente une variation d'amplitude brusque et importante pour une faible augmentation du signal d'entrée à partir d'une valeur nulle, de sorte à former des signaux S'1, S'2 carrés. Les signaux digitaux S'1, S'2 sont déphasés de 90° électriques et ont une résolution égale à celle de l'aimant multipolaire.

Dans le mode de réalisation représenté, la résolution des signaux S'1, S'2 est ensuite multipliée par deux par application de la fonction XOR. Ainsi, dans le cas d'un codeur à 24 paires de pôles, la résolution du signal de sortie est équivalente à celle d'un codeur à 48 paires de pôles.

## Revendications

1. Dispositif d'étanchéité pour un palier, ledit dispositif comprenant au moins une armature (5) destinée à être associée à un organe (2) dudit palier, ledit dispositif comprenant en outre un élément d'étanchéité (7) qui est porté par ladite armature, ledit élément d'étanchéité comportant au moins une lèvre d'étanchéité (8), ledit dispositif étant **caractérisé en ce qu'**au moins la lèvre d'étanchéité (8) est réalisée avec un matériau magnétisé de sorte à pouvoir étanchéifier ledit palier en disposant ladite lèvre en contact frottant sur une portée (9) réalisée en matériau ferromagnétique.

2. Dispositif d'étanchéité selon la revendication 1, **caractérisé en ce que** l'élément d'étanchéité (7) est formé d'une base (10) sur laquelle s'étend la lèvre (8), ladite base étant associée uniquement sur la partie extrême libre (5a) de l'armature (5).

3. Dispositif d'étanchéité selon la revendication 1 ou 2, ledit dispositif comprenant une armature interne (4) destinée à être associée à un organe tournant (3) du palier et une armature externe (5) destinée à être associée à un organe fixe (2) dudit palier, lesdites armatures formant entre elles un espace annulaire (6) dans lequel un codeur magnétique (1) est associé à l'armature interne (4), l'armature externe (5) étant réalisée en matériau amagnétique de sorte à permettre la lecture à travers elle des signaux magnétiques délivrés par le codeur (1), ledit élément permettant d'étanchéifier un côté de l'espace annulaire (6).

4. Dispositif d'étanchéité selon la revendication 3, **caractérisé en ce que** l'armature externe (5) porte l'élément d'étanchéité (7).

5. Dispositif d'étanchéité selon la revendication 3 ou 4, **caractérisé en ce que** l'armature interne (4) est réalisée en matériau ferromagnétique, la portée de frottement (9) de la lèvre d'étanchéité (8) étant réalisée sur ladite armature.

6. Dispositif d'étanchéité selon l'une quelconque des revendications 1 à 5, **caractérisé en ce que** l'élément d'étanchéité (7) comprend une zone charnière (11) par l'intermédiaire de laquelle la lèvre d'étanchéité (8) est associée à l'armature (5).

7. Dispositif d'étanchéité selon l'une quelconque des revendications 1 à 6, **caractérisé en ce que** l'élément d'étanchéité (7) intègre une culasse de fermeture du champ magnétique.

8. Dispositif d'étanchéité selon l'une quelconque des revendications 1 à 7, **caractérisé en ce que** la lèvre d'étanchéité (8) est réalisée en matériau élastomérique chargé en particules magnétiques.

9. Dispositif d'étanchéité selon la revendication 8, **caractérisé en ce que** le codeur (1) est réalisé en matériau élastomérique chargé en particules magnétiques.

10. Dispositif d'étanchéité à codeur magnétique intégré selon l'une quelconque des revendications 1 à 9, **caractérisé en ce que** l'élément d'étanchéité (7) comprend en outre un ressort (12) exerçant un effort de plaquage d'une lèvre d'étanchéité (8c) en contact frottant sur une portée (9a).

11. Dispositif d'étanchéité selon l'une quelconque des revendications 3 à 9, **caractérisé en ce que** le codeur (1) forme un aimant multipolaire comportant 2N paires de pôles.

12. Dispositif d'étanchéité selon la revendication 11, **caractérisé en ce que** N est strictement inférieur à 24, notamment égal à 12 ou à 6.

13. Palier à roulement comprenant un organe fixe (2), un organe tournant (3) et des corps roulants disposés dans un espace de roulement formé entre lesdits organes pour permettre leur rotation relative, ledit palier étant équipé d'au moins un dispositif d'étanchéité selon l'une quelconque des revendications 1 à 12, dans lequel au moins une lèvre d'étanchéité (8) réalisée avec un matériau magnétisé est en contact frottant sur une portée (9) réalisée en matériau ferromagnétique de sorte à étanchéifier un côté dudit palier.

14. Palier à roulement selon la revendication 13, **caractérisé en ce que** la portée (9) est réalisée sur l'organe tournant (3).

15. Palier à roulement selon la revendication 13 ou 14, **caractérisé en ce que** l'élément d'étanchéité (7) est associé à une armature externe (5), une lèvre d'étanchéité (8) réalisée avec un matériau magnétisé étant en contact frottant sur une portée (9) d'une armature interne (4) réalisée en matériau ferromagnétique.

16. Montage comprenant un palier à roulement selon l'une quelconque des revendications 13 à 15 lorsqu'elle dépend de la revendication 3, ledit montage comprenant en outre un système capteur d'informations comprenant le codeur (1) qui délivre des impulsions magnétiques et un capteur muni d'au moins deux éléments sensibles aptes à détecter ces impulsions, ledit capteur étant disposé, en regard du codeur (1), devant l'armature externe (5) de sorte que lesdites impulsions soient détectées au travers de ladite armature.

17. Montage selon la revendication 16, **caractérisé en ce que** le capteur comprend un dispositif de traitement des signaux détectés par les éléments sensibles, ledit dispositif comprenant des moyens déclencheurs et des moyens d'application de la fonction XOR sur les signaux déclenchés, de sorte à augmenter la résolution du signal de sortie par rapport à celle des signaux détectés.

18. Montage selon la revendication 17, **caractérisé en ce que** le dispositif de traitement comprend en outre des moyens de combinaison de deux signaux sinusoïdaux délivrés par les éléments sensibles, de sorte à délivrer deux signaux sinusoïdaux en quadrature, lesdits signaux en quadrature étant traités par les moyens déclencheurs et par la fonction XOR.

19. Montage selon l'une quelconque des revendications 16 à 18, **caractérisé en ce que** le capteur est dissocié mécaniquement de l'organe fixe (2) et de l'armature externe (5).
